# EUROPEAN PATENT APPLICATION

(11) **EP 2 533 083 A2**
(43) Date of publication of application: **12.12.2012**
(21) Application number: 12171204.6
(22) Date of filing: 07.06.2012
(51) Int. Cl.: G02B 6/293

(54) **Etalon assembly having an all-glass outer housing**

(30) Priority: 07.06.2011 US 201161494125 P
(71) Applicant: Oclaro Technology Limited, Caswell Towcester Northamptonshire NN12 8EQ (GB)
(72) Inventor: Wigley, Peter, Corning, NY New York 14830 (US); Summa, Mark A, New York, NY New York 14870 (US); Green, Eric T, New York, NY New York 14830 (US); Fang, Gary G, San Ramon, CA California 94582 (US)
(74) Representative: Talbot-Ponsonby, Daniel Frederick

(57) **Abstract**

In one aspect, an etalon assembly is provided. The etalon assembly includes an inner housing (121) having a collimating lens (122) and an etalon (123). The etalon assembly further includes a fibre pigtail assembly (112) optically aligned with respect to the collimating lens and affixed to the inner housing. Additionally, the etalon assembly includes an outer glass housing (301) with an inner cavity, the inner housing being affixed to a first end of the outer glass housing and a glass header (303) containing one or more sealed electrical pins being affixed to a second end of the outer glass housing that is opposite the first end.

## Description

The present invention generally relates to an etalon assembly. More particularly, embodiments of the invention relate to an etalon assembly having an all-glass outer housing.

A prior art etalon assembly comprises a housing and a fibre pigtail assembly. One problem with the prior art etalon assembly is that moisture and other pollutants will intrude into the etalon assembly, thereby impairing the optical performance of the etalon assembly. Therefore, there is a need for an etalon assembly having an all-glass outer housing.

In accordance with one aspect of the present invention there is provided an etalon assembly. The etalon assembly includes an inner housing having a collimating lens and an etalon. The etalon assembly further includes a fibre pigtail assembly optically aligned with respect to the collimating lens and affixed to the inner housing. Additionally, the etalon assembly includes an outer glass housing with an inner cavity, the inner housing being affixed to a first end of the outer glass housing and a glass header containing one or more sealed electrical pins being affixed to a second end of the outer glass housing that is opposite the first end.

In accordance with another aspect of the present invention there is provided a method of assembling an optical device. The method includes the step of sealing a first end of a cylindrical cavity of a housing to which a first optical element is attached. The method also includes the step of heating the cylindrical cavity to a first temperature. The method further includes the step of attaching a second optical element to a second end of the cylindrical cavity opposite the first end and then cooling the cylindrical cavity to a second temperature that is lower than the first temperature. Additionally, the method includes the step of sealing the second end of the cylindrical cavity.

In accordance with a further aspect of the present invention there is provided a method of assembling an optical device. The method includes the step of sealing a first end of a cylindrical cavity of a housing into which a sub-assembly including a fibre pigtail assembly, a collimating lens, and an etalon is inserted. Further, the method includes the step of inserting a glass header into a second end of the cylindrical cavity of the housing opposite the first end and then cooling the cylindrical cavity of the housing to a second temperature that is lower than the first temperature. Additionally, the method includes the step of sealing the second end of the cylindrical cavity of the housing.

In accordance with another aspect of the present invention there is provided a method of aligning optical components of an etalon assembly including a fibre pigtail assembly, a collimating lens, and an etalon. The method includes the step of aligning the collimating lens with respect to the etalon within a moisture-resistant sealed cylindrical cavity. The method also includes the step of aligning the fibre pigtail assembly with respect to the collimating lens.

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 is a cross-sectional view of a tunable dispersion compensator (TDC) core.
Figure 2 illustrates a cross-sectional view of an alternative TDC core.
Figure 3 is a cross-sectional view of the TDC core of Figure 1 mounted inside an outer housing.
Figure 4 is a cross-sectional view of the TDC core of Figure 2 mounted inside an outer housing.
Figure 5 illustrates a centre tube with a collimating lens and a thermally conductive slug positioned in preparation for assembly of the TDC.
Figure 6 illustrates the collimating lens assembled inside the centre tube.
Figure 7 illustrates the collimating lens and the thermally conductive slug assembled inside the centre tube forming a sealed centrepiece assembly.
Figure 8 illustrates a pigtail assembly butted against and joined to the sealed centrepiece assembly.
Figure 9 illustrates the TDC core with a heater and a thermistor attached to the sealed centrepiece assembly.
Figure 10 illustrates the TDC core assembled inside an outer housing.
Figure 11 illustrates a TDC with a weep hole formed in a sidewall of the centre tube.
Figure 12 illustrates a cross-sectional view of a TDC core that has a circumferential groove formed in an internal sidewall of the centre tube.

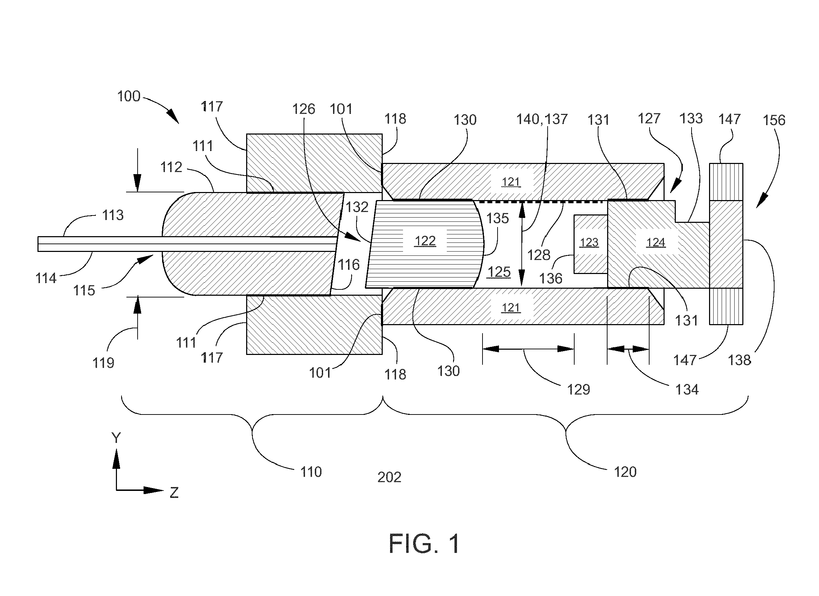

Figure 1 is a cross-sectional view of a tunable dispersion compensator (TDC) core 100. The TDC core 100 is a micro-optic device configured with a sealed, low-moisture and low-contaminant volume that contains a collimator and an etalon assembly. Because the collimator and the etalon assembly are sealed inside the clean, low-moisture volume, precision optical alignment and coupling of the TDC core 100 with attached optical fibres can be performed in a standard cleanroom environment rather than in an ultra-clean environment.

TDC core 100 includes a pigtail assembly 110 and a sealed centrepiece assembly 120 joined together at an adhesive bond line 101. Pigtail assembly 110 includes a dual-fibre pigtail 112 joined to a pigtail tube 117, and sealed centrepiece assembly 120 includes a centre tube 121, a collimating lens 122, an etalon 123 that is mounted to a thermally conductive slug 124, a sealed cavity 125, and a heater 1.

Dual-fibre pigtail 112 is a solid piece of glass, such as borosilicate glass, with a capillary 115 formed therein. Enclosed in capillary 115 are two optical fibres, input fibre 113 and output fibre 114. Input fibre 113 is an optical input fibre that carries an optical signal to TDC core 100 and output fibre 114 is an optical output fibre that carries signals from TDC core 100. Input fibre 113 and output fibre 114 terminate at angled surface 116 of dual-fibre pigtail 112, and are polished and coated with an anti-reflective (AR) coating. Angled surface 116 is angled at a shallow angle from the plane perpendicular to the longitudinal axis of input fibre 113 and output fibre 114. In Figure 1, the longitudinal axis of input fibre 113 and output fibre 114 corresponds to the z-axis, where the y-axis is parallel to the page and the x-axis is out of the page. In some embodiments, angled surface 116 is angled at 8 degrees from a plane perpendicular to the z-axis. Input fibre 113 and output fibre 114 are separated by a small, tightly toleranced distance, on the order of about 100 microns. In one embodiment, input fibre 113 and output fibre 114 are configured with a separation of 125 ± 3 microns.

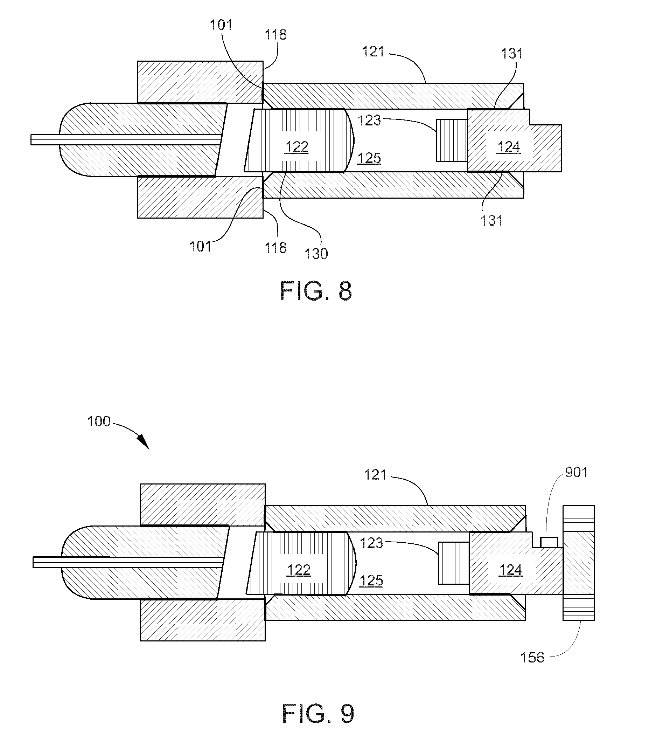

Pigtail tube 117 is a mounting structure for dual-fibre pigtail 112 that provides a flat surface 118 for joining pigtail assembly 110 to sealed centrepiece assembly 120. The inner diameter of pigtail tube 117 is selected to be slightly larger than the outer diameter 119 of dual-fibre pigtail 112 to allow a bond 111, such as an adhesive bond, to be formed therebetween. In some embodiments, pigtail tube 117 is configured with an inner diameter that is substantially larger than the outer diameter 140 of collimating lens 122. In such an embodiment, relative motion between pigtail assembly 110 and centrepiece assembly 120 that takes place during Cartesian alignment of pigtail assembly 110 and centrepiece assembly 120 will not result in mechanical interference between pigtail tube 117 and collimating lens 122. Cartesian alignment of pigtail assembly 110 and centrepiece assembly 120 is described in greater detail below in conjunction with Figure 8.

Centre tube 121 is a tube comprised of a glass material, such as a borosilicate glass, is configured with chamfered openings 126, 127, and serves as a housing for micro-optic components of TDC core 100. Collimating lens 122 is positioned in chamfered opening 126 and thermally conductive slug 124 is positioned in chamfered opening 127 as shown. Z-axis separation 129 indicates the distance separating collimating lens 122 and etalon 123 along the longitudinal axis of centre tube 121, and is selected to minimize insertion loss when light enters TDC core 100 from input fibre 113, is reflected by etalon 123, and is optically coupled to output fibre 114. As defined herein, two optical elements are "optically coupled" when positioned so that light passes from one optical element to the other. In one embodiment, etalon 123 is positioned at the beam waist of an incident collimated light beam from input fibre 113. Collimating lens 122 is fixed in place in chamfered opening 126 with a bond line 130 or other technically feasible sealing technique suitable for use in a micro-optic device, such as laser welding, soldering, fritting, brazing, and the like. In embodiments in which bond line 130 is an adhesive bond line, bond line 130 has a thickness and length similar to adhesive bond line 131 to ensure that sealed cavity 125 is not subject to unwanted infiltration of moisture. Thermally conductive slug 124 is fixed in place in chamfered opening 127 with an adhesive bond line 131, the length and thickness of which is described in greater detail below. Adhesive bond line 131 is formed with an epoxy or organic adhesive, such as a thermally cured adhesive, a UV-cured adhesive, and the like. Together, centre tube 121, collimating lens 122, and thermally conductive slug 124 form sealed cavity 125.

Collimating lens 122 is a simple or compound lens configured to collimate divergent light beams exiting input fibre 113. The radius of the collimating lens 122 is based on the divergence angle of light exiting input fibre 113 and the distance traveled through collimating lens 122, where the divergence angle depends on the numerical aperture of input fibre 113. For example, in some embodiments, collimating lens 122 is configured to collimate a divergent light beam exiting input fibre 113 and having a beam width of 10 microns at angled surface 116 so that the divergent light beam is converted to a collimated light beam having a beam width of approximately 500 microns that is directed toward etalon 123. To prevent optical loss, collimating lens 122 may be coated with an AR coating on angled surface 132. In the embodiment illustrated in Figure 1, collimating lens 122 is configured to fit inside chamfered opening 126. In other embodiments, collimating lens 122 is configured as an end cap and, rather than being inserted into chamfered opening 126, is positioned over chamfered opening 126 and fixed in place using methods according to embodiments of the invention.

Etalon 123 may be any suitable etalon known in the art configured to enable the desired operating characteristics of TDC core 100. In some embodiments, the body of etalon 123 includes a rectangular body diced from a bulk single crystal silicon wafer that has been precisely polished to a thickness providing the desired free spectral range. In other embodiments, etalon 123 may be circular or rectangular in shape rather than square. One side of etalon 123 is coated with a 100% reflector and the opposite side is coated with a partial reflector. Etalon 123 can be appropriately sized based on the overall size, configuration, and functionality of TDC core 100. In some embodiments, etalon 123 may be as large as 2.0 mm x 2.0 mm. In other embodiments, etalon 123 may be as small as 1.0 mm x 1.0 mm or smaller. In the embodiment illustrated in Figure 1, etalon 123 is mounted directly to silicon slug 124 as shown. Etalon 123 is oriented relative to incident collimated light beams from input fibre 113 so that the incident light is imaged back to the output fibre. For example, in some embodiments, etalon 123 is not oriented perpendicular to the z-axis of TDC core 100, and is instead slightly tilted with respect the z-axis.

Thermally conductive slug 124 provides a planar supporting surface inside sealed cavity 125 for etalon 123 and serves as a thermally conductive path between etalon 123 and heater 156. In addition, thermally conductive slug 124 fills chamfered opening 127 so that the contamination-sensitive surfaces 135, 136 of etalon 123 and collimating lens 122 are isolated in sealed cavity 125 from ambient contamination such as moisture, dust, volatile condensable materials, and the like. Thermally conductive slug 124 is comprised of a highly thermally conductive material compatible for use in a micro-optic device, such as polycrystalline or monocrystalline silicon. In some embodiments, thermally conductive slug 124 includes a flat 133, on which a thermistor may be mounted to facilitate accurate control of TDC core 100 when in operation. In some embodiments, thermally conductive slug 124 is configured as an end cap and, rather than being inserted into chamfered opening 127, is positioned over chamfered opening 127 and fixed in place using methods according to embodiments of the invention.

In some embodiments, thermally conductive slug 124 is configured with dimensions that ensure that adhesive bond line 131 can effectively prevent infiltration of moisture and/or other contaminants into sealed cavity 125 for the lifetime of TDC core 100. Specifically, the dimensions include a contact length 134, i.e., the length of thermally conductive slug 124 that is in contact with an inner surface of centre tube 121, and an outer diameter 137. Resistivity to moisture of the adhesive that forms adhesive bond line 131 is proportional to the length of adhesive bond line 131 divided by the thickness of adhesive bond line 131. Thus, when adhesive bond line 131 is configured as a very long, thin bond line, even though adhesive bond line 131 is comprised of a thermally or UV-cured adhesive, adhesive line 131 can act as a moisture resistant seal, and sealed cavity 125 can remain moisture-free for a very long time.

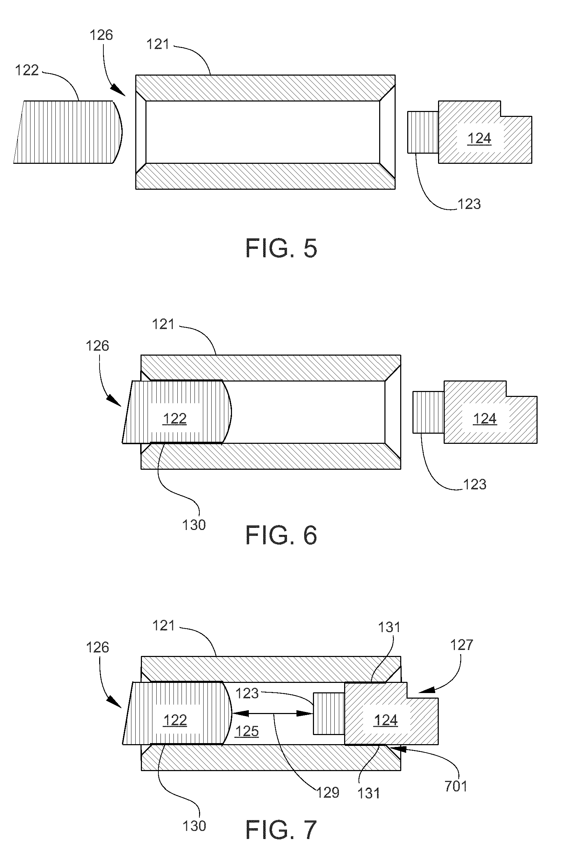

In some embodiments, contact length 134 of adhesive bond line 131 is at least about 40 times greater than the thickness of adhesive bond line 131 to ensure high moisture resistivity. In further embodiments, contact length 134 of adhesive bond line 131 is at least 100 times greater than the thickness of adhesive bond line 131 in order to ensure very high moisture resistivity, so that for every 10 microns in thickness of adhesive bond line 131, contact length 134 is at least one millimeter in length. Thus, when adhesive bond line 131 is 50 microns thick, contact length 134 is at least 5 mm in length, when adhesive bond line 131 is 20 microns thick, contact length 134 is at least 2 mm in length, and so on. For example, in some embodiments, adhesive bond line 131 is configured to allow sealed cavity 125 to maintain moisture resistivity for 1000-2000 hours at 85°C and 85% relative humidity at standard atmosphere. In one such embodiment, outer diameter 137 is selected so that adhesive bond line 131 is 30 microns in thickness and contact length 134 is configured to be 3 mm. It is noted that in such embodiments, because the method of assembly described below in conjunction with Figures 5-10 is used, sealed cavity 125 can have a concentration of water vapour of less than 5000 ppm and/or a concentration of volatile condensable material that is less than 2500 ppm. In another such embodiment, adhesive bond line 131 has a thickness of 20 microns or less and a length of at least 2 mm, and provides a seal that resists moisture for at least 1000 hours at 85°C and 85% relative humidity at standard atmosphere, as defined by Telecordia GR-468-CORE. In this embodiment, adhesive bond line 131 has been demonstrated to have a leak rate of < 5x10⁻⁸ cm³/sec. at standard atmosphere of helium and sealed cavity 125 has been demonstrated to have a beginning of life concentration of water vapour of no greater than 1000 ppm and beginning of life concentration of volatile condensable materials of no greater than 500 ppm. In other embodiments, sealed cavity 125 may have a beginning of life concentration of water vapour of up to 15000 ppm and a beginning of life concentration of volatile condensable materials of up to 7500 ppm.

Sealed cavity 125 is a low-moisture and low-contaminant sealed volume in TDC core 100 that contains and protects contamination-sensitive surfaces 135, 136 of collimating lens 122 and etalon 123, respectively. Due to the long, thin configuration of adhesive bond line 131 and bond line 130 and the method in which sealed cavity 125 is formed (described below in conjunction with Figures 5-7), sealed cavity 125 is largely contaminant-free. As noted above, despite the use of an organic adhesive or epoxy-based material in adhesive bond line 131, sealed cavity 125 can be formed with a concentration of water vapour of less than 15000 ppm and a concentration of volatile condensable material of less than 7500 ppm in some embodiments, and in other embodiments, a concentration of water vapour of less than 5000 ppm and a concentration of volatile condensable material of less than 2500 ppm. In yet other embodiments, for example when the ratio of contact length 134 to the thickness of adhesive bond line 131 is 100 or more, a concentration of water vapour in sealed cavity 125 of less than about 1000 ppm and a concentration of volatile condensable materials less than 500 ppm is obtainable. To further reduce the presence of moisture and/or volatile condensable materials in sealed cavity 125, in some embodiments a getter material 128, such as a moisture- or volatile organic compound-absorbing paste, may be positioned on non-optical surfaces of sealed cavity 125.

The low-contaminant environment inside sealed cavity 125 minimizes condensation of contaminants on contamination-sensitive surfaces 135, 136, thereby preventing significant optical loss caused by TDC core 100. For example, when the concentration of moisture in sealed cavity 125 exceeds 15,000 ppm and/or the concentration of volatile condensable materials exceeds 7500 ppm, condensation may occur on surfaces in sealed cavity 125 during normal operation, and very large optical losses will be introduced, e.g., on the order of 10-20 dB. In addition, the presence of dust and other particulate contamination in sealed cavity 125 can have a similar effect, and methods of forming sealed cavity 125, as described herein, also prevent significant particulate contamination in sealed cavity 125.

Heater 156 is mounted on thermally conductive slug 124 and is configured to provide temperature control of etalon 123 during normal operation of TDC core 100. In the embodiment illustrated in Figure 1, heater 156 is an annular ring 147 positioned around a thermally conductive element 138, which in turn is coupled to thermally conductive slug 124, but other technically feasible configurations of heater 156 may also be used. Because heater 125 and etalon 123 are separated by thermally conductive slug 124, etalon 123 is less likely to experience stress resulting from non-uniform heating.

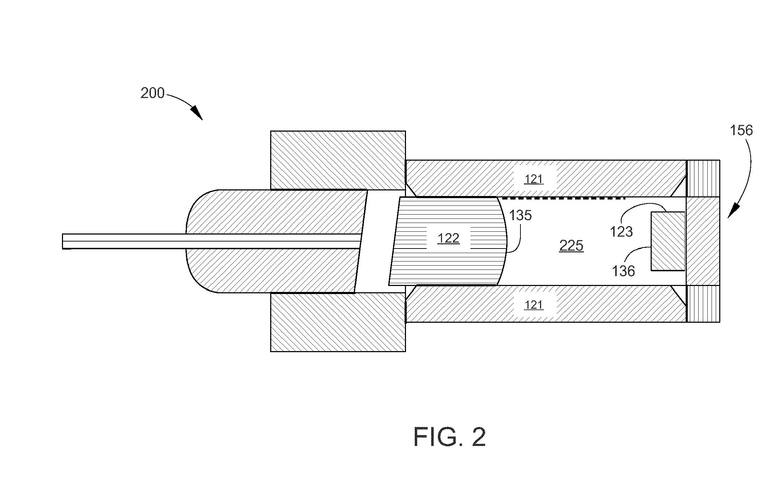

Figure 2 illustrates a cross-sectional view of an alternative TDC core 200. TDC core 200 is substantially similar in organization and operation to TDC core 100, except that contamination-sensitive surfaces 135, 136 of etalon 123 and collimating lens 122 are disposed in an open cavity 225 instead of a sealed cavity. In such an embodiment, contamination-sensitive surfaces 135, 136 are isolated from moisture, volatile condensable material, and particulate contamination by an outer housing (described below in conjunction with Figure 5). As shown, etalon 123 is mounted directly on heater 156.

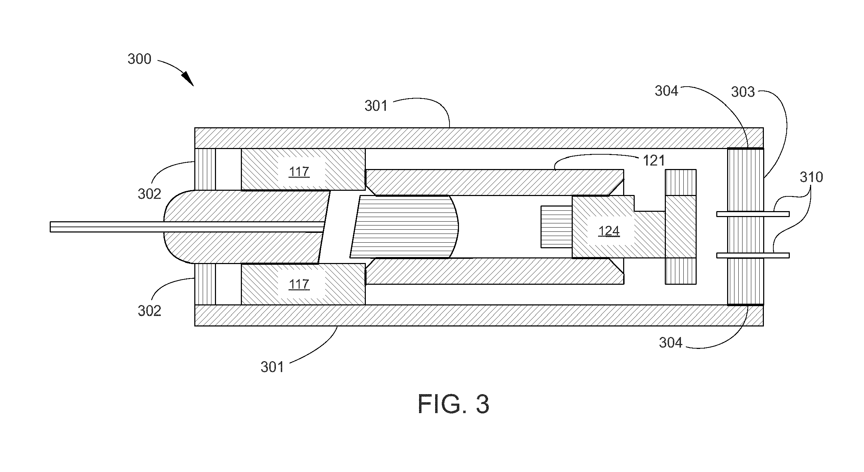

Figure 3 is a cross-sectional view of TDC core 100 mounted inside an outer housing 300. Outer housing 300 may be sealed using methods described below to act as additional contamination isolation for contamination-sensitive surfaces 135, 136. Outer housing 300 also provides significant thermal insulation for TDC core 100, thereby minimizing heat loss and power usage of TDC core 100.

Outer housing 300 includes an outer tube 301, and end plate 302, and an end cap 303. Outer tube 301 may be constructed of similar material as centre tube 121, i.e., borosilicate glass or other material suitable for use in a micro-optic assembly. End plate 302 is a glass plate joined to outer tube 301 using an epoxy- or organic adhesive-based bond or any technically feasible bonding technique suitable for use in a micro-optic device, such as laser welding, soldering, fritting, brazing, and the like. End cap 303 may be a borosilicate glass material and is joined to outer tube 301 by an adhesive bond line 304. As with thermally conductive slug 124, the length and outer diameter of end cap 303 may be selected so that adhesive bond line 304 provides a highly moisture-resistant seal, e.g., a seal that can maintain moisture resistivity for 1000-2000 hours at 85°C and 85% relative humidity. Similarly, the length and outer diameter of pigtail tube 117 may be selected so that a second adhesive bond line 305 may be formed between pigtail tube 117 and outer tube 301, where the second adhesive bond line 305 provides a similar highly moisture-resistant seal. Thus, outer housing 300 can act as a second contamination-resistant housing that isolates TDC core 100 from ambient conditions.

As shown, end cap 303 includes electrical connections 310, which allow the requisite electrical connections to be made to TDC core 100, such as thermistor output for controlling TDC core 100 and input power for heater 156. Electrical connections 310 are initially passed through openings in end cap 303 which are then filled with glass frit and heated to the melting point of the frit to form a conventional hermetic seal around electrical connections.

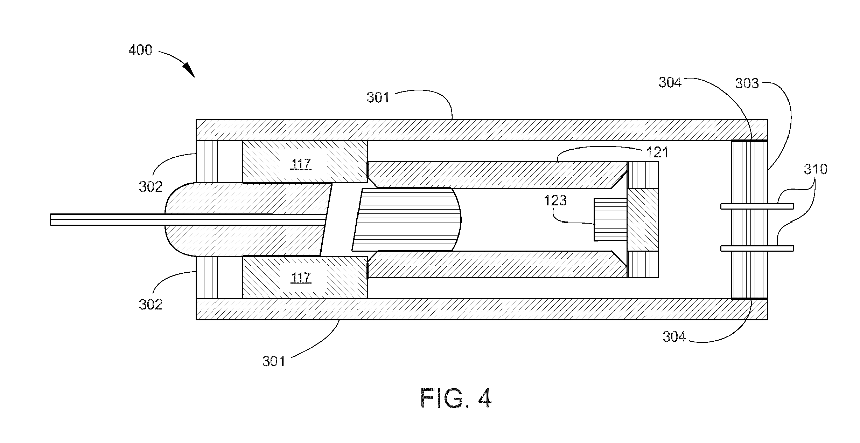

Figure 4 is a cross-sectional view of TDC core 200 mounted inside an outer housing 400. Outer housing 400 is substantially similar in organization to outer housing 300, but configured for a TDC having an unsealed core, such as open cavity 225. Thus, outer housing 400 may be sealed using methods described below to act as the primary contamination isolation for contamination-sensitive surfaces 135, 136 of TDC core 200. Outer housing 400 also provides significant thermal insulation for TDC core 200, thereby minimizing heat loss and power usage of TDC core 200.

A method of forming TDC core 100 or other sealed micro-optic device is now described. Figures 5-10 illustrate schematic side views of TDC core 100 being formed.

Figure 5 illustrates centre tube 121 with collimating lens 122 and thermally conductive slug 124 positioned in preparation for assembly of TDC 100. Prior to the assembly of TDC 100, etalon 123 is mounted on thermally conductive slug 124.

Figure 6 illustrates collimating lens 122 assembled inside chamfered opening 126 of centre tube 121 and joined thereto by bond line 130. Bond line 130 may be formed by a thermally-cured epoxy or organic adhesive that is applied to an outer surface of collimating lens 122, an inner surface of centre tube 121, or both, prior to assembly. Alternatively, in some embodiments, collimating lens 122 is joined to centre tube 121 using any other technically feasible joining technique, such as laser welding, brazing, soldering, fritting, etc., rather than using a thermally cured adhesive. After insertion of collimating lens in chamfered opening 126, bond line 130 is formed by heating collimating lens 122, centre tube 121, and the adhesive to a suitable adhesive-curing temperature, e.g., 120°C. After curing, collimating lens 122 and centre tube 121 (now joined by bond line 130) are baked in a nitrogen-purged oven to remove residual contaminants, such as volatile organic compounds (VOCs), volatile condensable materials, and the like. In some embodiments, the baking process takes place at or above the operating temperature of TDC core 100, where the operating temperature is defined as the highest temperature reached by any component of TDC core 100 during normal operation. In this way, moisture and volatile condensable materials present on surfaces of TDC core 100 will out-gass sufficiently to avoid further significant out-gassing during operation of TDC core 100 that can result in condensation onto critical surfaces in TDC core 100. Consequently, such baking processes are generally in the range of about 100°C to 120°C. In other embodiments, the baking process takes place at or above the boiling point of water, since moisture is generally the most common contamination present in micro-optic assemblies. Thus, when TDC core 100 is part of an atmospheric micro-optic assembly, such baking processes take place at or above 100°C.

Figure 7 illustrates collimating lens 122 and thermally conductive slug 124 assembled inside centre tube 121, forming sealed centrepiece assembly 120, without heater 156. As shown, the outer diameter of thermally conductive slug 124 is joined to the inner diameter of chamfered opening 127 by adhesive bond line 131. Thermally conductive slug 124 is positioned so that etalon 123 is separated from collimating lens 122 by z-axis separation 129. In some embodiments, z-axis separation 129 is selected so that etalon 123 is positioned at the beam waist of collimated incident light directed from collimating lens 122. In this way, etalon 123 is positioned horizontally, i.e., along the z-axis of TDC core 100, to minimize insertion loss between input fibre 113 and output fibre 114.

It is noted that when using an adhesive or other polymeric material to form bond line 131, a "piston effect" can complicate and/or prevent precise positioning of thermally conductive slug 124 shown in Figure 7. Specifically, because the polymeric material used to form adhesive bond line 131 also forms an air-tight seal between thermally conductive slug 124 and centre tube 121, thermally conductive slug 124 will act like an air-compressing piston when the polymeric material is applied prior to the insertion of thermally conductive slug 124 into chamfered opening 127. Consequently, air trapped in sealed cavity 125 will be highly compressed by the insertion of thermally conductive slug 124 into chamfered opening 127, and will force thermally conductive slug 124 out of position before adhesive bond line 131 can be formed.

In one embodiment, an adhesive-wicking operation is performed to allow precise positioning of thermally conductive slug 124 while forming adhesive bond line 131. In such an embodiment, centre tube 121 and thermally conductive slug 124 are heated to an elevated temperature at or near the curing temperature of the adhesive, for example 110°C, then thermally conductive slug 124 is inserted in chamfered opening 127. Once positioned as desired, e.g., when etalon 123 is located at the beam waist of incident collimated light from input fibre 113, thermally conductive slug 124 is held in place with a fixture, by gravity, or by any other technically feasible means, and the temperature of thermally conductive slug 124 and centre tube 121 is slightly reduced, e.g., on the order of five to ten degrees C. Then, a suitable thermally-cured adhesive is applied to the gap between thermally conductive slug 124 and centre tube 121. Because the cooling of thermally conductive slug 124 and centre tube 121 causes a slight vacuum to be formed in sealed cavity 125, the adhesive is wicked into the gap between thermally conductive slug 124 and centre tube 121. Thermally conductive slug 124 and centre tube 121 are then held at the elevated temperature for a suitable time until the applied adhesive is cured, adhesive bond line 131 is formed, and thermally conductive slug 124 is fixed in the desired position. Any suitable thermally-cured adhesive known in the art may be used to form adhesive bond line 131.

Because sealed cavity 125 is formed by components that are at an elevated temperature, the surfaces of the components are extremely clean and dry. Consequently, the environment inside sealed cavity 125, once completely enclosed by the insertion of thermally conductive slug 124 in chamfered opening 127 and the application of adhesive to chamfer 701, is a low-contaminant environment. Such a low-contaminant environment can ordinarily only be produced by performing the assembly of the sealed cavity in a highly controlled environment, such as a low-humidity, ultra-clean glove box. However, the assembly operation described above may be performed in a standard cleanroom, such as in a Class 10,000 cleanroom, without the need for an ultra-clean environment.

Figure 8 illustrates pigtail assembly 110 butted against and joined to sealed centrepiece assembly 120. Flat surface 118 of pigtail assembly 110 is in contact with a corresponding surface of centre tube 121 of sealed centrepiece assembly 120 and is joined thereto by adhesive bond line 101 or other technically feasible joining technique. Prior to curing of the adhesive material making up adhesive bond line 101, pigtail assembly 110 is aligned with sealed centrepiece assembly 120 along the x-axis (out of page) and the y-axis to minimize insertion loss of TDC core 100. Flat surface118 facilitates Cartesian alignment of pigtail assembly 110 with sealed centrepiece assembly 120, i.e., movement of pigtail assembly 110 along the x-axis and y-axis of TDC core 100, so that the desired alignment can be achieved. In a Cartesian alignment procedure, the adhesive material used to form adhesive bond line 101 is applied to flat surface 118, the corresponding surface of sealed centrepiece assembly 120, and/or both, then the x- and y-position of pigtail assembly 110 is adjusted until minimum insertion loss for TDC core 100 is achieved. Once the desired x- and y-position of pigtail assembly 110 is achieved, pigtail assembly 110 and sealed centrepiece assembly 120 are fixtured in place and adhesive bond line 101 is formed by curing.

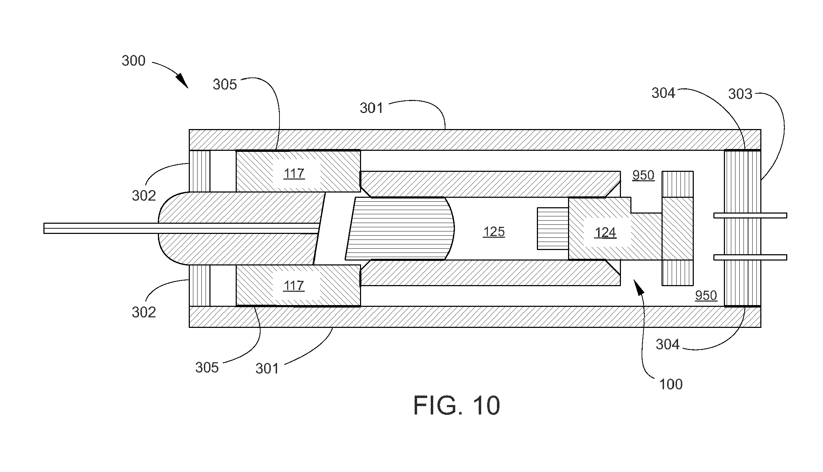

Figure 9 illustrates TDC core 100 with heater 156 and a thermistor 901 attached to sealed centrepiece assembly 120, thereby completing the assembly of TDC core 100. Figure 10 illustrates TDC core 100 assembled inside outer housing 300. As described above, outer housing 300 acts as a second contamination-resistant housing for isolating TDC core 100 from ambient conditions. Thus, in some embodiments, outer housing 300 is assembled with a sealed cavity 950 having a highly moisture-resistance seal and surrounding sealed cavity 125. In such embodiments, outer housing 300 is assembled with a substantially similar method to that described above for forming sealed cavity 125 in TDC core 100. Specifically, adhesive line 305 joining pigtail tube 117 to outer tube 301 is first formed via curing, then TDC core 100 and outer tube 301 are baked to remove moisture and any residual volatile condensable materials from the previous adhesive-curing process. Adhesive bond line 304 joining end cap 303 to outer tube 301 is then formed using an adhesive-wicking procedure as described above in conjunction with Figure 7. In this way, sealed cavity 950 can be formed enclosing sealed cavity 125, thereby providing substantial thermal insulation and an addition contamination- and moisture-resistant housing for isolating TDC core 100 from ambient conditions.

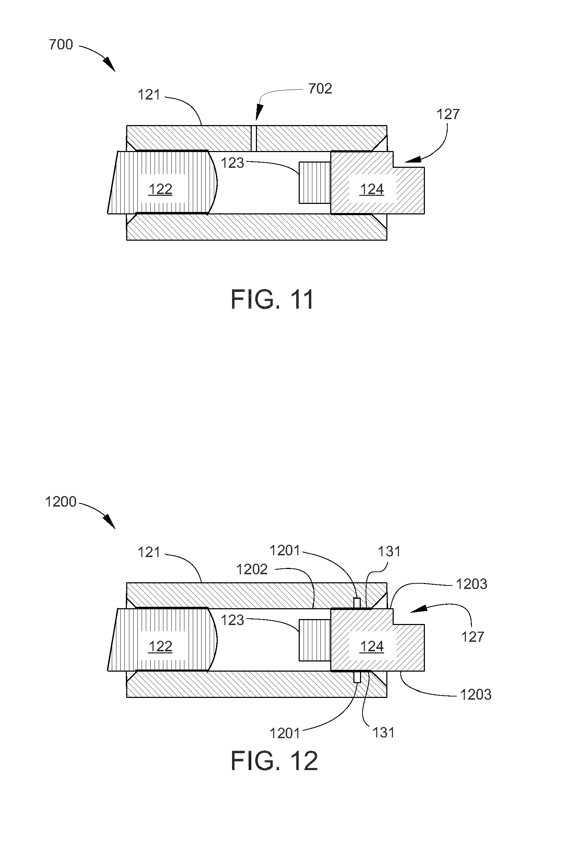

In one embodiment, the piston effect described above may be circumvented during assembly of TDC core 100 with the formation of a weep hole in a sidewall of centre tube 121. Figure 11 illustrates a TDC 700 that has a weep hole 702 formed in a sidewall of centre tube 121. Weep hole 702 allows excess air to escape from sealed cavity 125 as thermally conductive slug 124 is inserted into chamfered opening 127, even when an uncured adhesive or other polymeric bonding material forms an air-tight seal between centre tube 121 and thermally conductive slug 124. In such an embodiment, weep hole 702 is formed prior to the insertion of thermally conductive slug 124 into chamfered opening 127 of centre tube 121. After application of a suitable adhesive to thermally conductive slug 124 and/or a surface of chamfered opening 127, thermally conductive slug 124 is inserted and weep hole 702 is sealed by any technically feasible sealing technique, such as laser welding, fritting, soldering, brazing, and adhesive seal, etc.

In one embodiment, the above-described piston effect may be circumvented during assembly of TDC core 100 with the formation of a circumferential groove formed in an internal sidewall of centre tube 121. Figure 12 illustrates a cross-sectional view of a TDC core 1200 that has a circumferential groove 1201 formed in an internal sidewall 1202 of centre tube 121. The position of circumferential groove 1201 is selected to be adjacent to thermally conductive slug 124 when thermally conductive slug 124 is being inserted into chamfered opening 127. In one embodiment, the adhesive used to form adhesive bond line 131 is applied to sidewall 1203 of thermally conductive slug 124, internal sidewall 1202 of centre tube 121, and/or both prior to the insertion of thermally conductive slug 124 into chamfered opening 127. In another embodiment, the adhesive used to form adhesive bond line 131 is applied to circumferential groove 1201 prior to the insertion of thermally conductive slug 124 into chamfered opening 127.

In one embodiment, an optical device assembly is provided. The optical device includes a housing with a moisture-resistant sealed cylindrical cavity in which first and second optical surfaces are optically coupled. The first optical surface being disposed on a first optical element that is within a first end of the cylindrical cavity and the second optical surface being disposed on a second optical element that is within a second end of the cylindrical cavity that is opposite the first end.

In one or more of the embodiments described herein, the first optical surface is a lens surface and the second optical surface is a reflective surface.

In one or more of the embodiments described herein, the first optical element includes a collimating lens and the second optical element includes an etalon.

In one or more of the embodiments described herein, the optical device includes a heater attached to the etalon, the heater being disposed outside the sealed cylindrical cavity.

In one or more of the embodiments described herein, a leak rate of the sealed cylindrical cavity is less than 5x10⁻⁸ cm³/sec of helium at standard atmosphere.

In one or more of the embodiments described herein, a concentration of water vapour within the sealed cylindrical cavity is less than 15,000 ppm.

In one or more of the embodiments described herein, a concentration of water vapour within the sealed cylindrical cavity is less than 5000 ppm.

In one or more of the embodiments described herein, a concentration of volatile condensable material within the sealed cylindrical cavity is less than 7500 ppm.

In one or more of the embodiments described herein, a concentration of volatile condensable material within the sealed cylindrical cavity is less than 2500 ppm.

In one or more of the embodiments described herein, the sealed cylindrical cavity is moisture resistant to at least 1000 hours of exposure to damp heat at 85 °C and 85% humidity.

In one embodiment, a method of assembling an optical device is provided. The method includes the step of positioning a first optical element at a first side of a cavity of a housing to position an optical surface of the first optical element to be exposed to the cavity. The method also includes after positioning said first optical element, the step of heating the cavity to at least a normal operating temperature of the optical device. Further, the method includes after said heating, the step of positioning a second optical element at a second side of the cavity that is opposite the first side to position an optical surface of the second optical element to be exposed to the cavity. Additionally, the method includes the step of sealing the cavity.

In one or more of the embodiments described herein, wherein the first optical element is positioned at the first side of the cavity by inserting the first optical element into the cavity from the first side of the cavity to position the optical surface of the first optical element within the cavity, and the second optical element is positioned at the second side of the cavity by inserting the second optical element into the cavity from the second side of the cavity to position the optical surface of the second optical element within the cavity.

In one or more of the embodiments described herein, the cavity is sealed by applying an adhesive material between the second optical element and the housing.

In one or more of the embodiments described herein, the cavity is sealed by any one of soldering, brazing, welding, and fritting.

In one or more of the embodiments described herein, after positioning said first optical element, the cavity is heated to a temperature high enough to vapourize moisture within the cavity.

In one or more of the embodiments described herein, the temperature high enough to vapourize moisture within the cavity is at 100 °C at standard atmosphere.

In one or more of the embodiments described herein, the cavity is sealed to be moisture-resistant.

In one or more of the embodiments described herein, a leak rate of the sealed cavity is less than 5x10⁻⁸ cm³/sec of helium at standard atmosphere.

In one or more of the embodiments described herein, the cavity is a cylindrical cavity.

In one embodiment, optical device assembly is provided. The optical device assembly includes a housing with a cylindrical cavity. The optical device assembly further includes a first optical element having a cylindrical section, an outer diameter of which is substantially equal to an inner diameter of the cylindrical cavity, and a second optical element having a cylindrical section, an outer diameter of which is substantially equal to an inner diameter of the cylindrical cavity, wherein the first and second optical elements are disposed within opposite ends of the cylindrical cavity. The optical device assembly also includes an organic adhesive material disposed around an outer circumference of the cylindrical section of the second optical element to form a seal between the cylindrical section of the second optical element and the housing, wherein, at all points of the seal, the organic adhesive material extends in an axial direction of the cylindrical section of the second optical element by a certain distance, such that a ratio of an axial extension distance of the organic adhesive material to a thickness of the organic adhesive material is at least 40.

In one or more of the embodiments described herein, the housing has a chamfer portion at an end where the second optical element is disposed.

In one or more of the embodiments described herein, the optical device includes an outer housing with a cavity in which the housing having the first and second optical elements is disposed at a first end and a glass header containing one or more sealed electrical pins is disposed at a second end that is opposite the first end.

In one or more of the embodiments described herein, the outer housing has a chamfer portion at an end where the glass header is disposed.

In one or more of the embodiments described herein, the outer housing is made of glass.

In one embodiment, a method of assembling an optical device is provided. The method includes the step of sealing a first end of a cylindrical cavity of a housing to which a first optical element is attached. The method also includes the step of heating the cylindrical cavity to a first temperature. The method further includes the step of attaching a second optical element to a second end of the cylindrical cavity opposite the first end and then cooling the cylindrical cavity to a second temperature that is lower than the first temperature. Additionally, the method includes the step of sealing the second end of the cylindrical cavity.

In one or more of the embodiments described herein, the second end of the cylindrical cavity is sealed while the cylindrical cavity is being cooled to the second temperature.

In one or more of the embodiments described herein, the housing has a chamfer portion at an end where the second optical element is inserted and a sealing material is introduced into the chamfer portion to allow the sealing material to wick into gaps between the second optical element and the housing as the cylindrical cavity is being cooled.

In one or more of the embodiments described herein, the method includes the step of attaching a third optical element to the first optical element to form a sub-assembly of first, second, and third optical elements.

In one or more of the embodiments described herein, the first optical element includes a collimating lens and the second optical element includes an etalon, and the third optical element includes a fibre pigtail assembly.

In one or more of the embodiments described herein, the method includes the step of sealing a first end of a cylindrical cavity of an outer housing into which the sub-assembly is inserted. The method also includes the step of heating the cylindrical cavity of the outer glass housing to a third temperature. The method further includes the step of inserting a glass header into a second end of the cylindrical cavity of the outer housing opposite the first end and then cooling the cylindrical cavity of the outer housing to a fourth temperature that is lower than the third temperature. Additionally, the method includes the step of sealing the second end of the cylindrical cavity of the outer housing.

In one or more of the embodiments described herein, the second end of the cylindrical cavity of the outer housing is sealed while the cylindrical cavity of the outer housing is being cooled to the fourth temperature.

In one or more of the embodiments described herein, the outer housing has a chamfer portion at an end where the glass header is inserted and a sealing material is introduced into the chamfer portion to allow the sealing material to wick into gaps between the glass header and the outer housing as the cylindrical cavity of the outer housing is being cooled.

In one embodiment, a method of assembling an optical device is provided. The method includes the step of sealing a first end of a cylindrical cavity of a housing into which a sub-assembly including a fibre pigtail assembly, a collimating lens, and an etalon is inserted. Further, the method includes the step of inserting a glass header into a second end of the cylindrical cavity of the housing opposite the first end and then cooling the cylindrical cavity of the housing to a second temperature that is lower than the first temperature. Additionally, the method includes the step of sealing the second end of the cylindrical cavity of the housing.

In one or more of the embodiments described herein, the housing has a chamfer portion at an end where the glass header is inserted and a sealing material is introduced into the chamfer portion to allow the sealing material to wick into gaps between the glass header and the housing as the cylindrical cavity is being cooled.

In one embodiment, an etalon assembly is provided. The etalon assembly includes an inner housing including a collimating lens and an etalon. The etalon assembly further includes a fibre pigtail assembly optically aligned with respect to the collimating lens and affixed to the inner housing. Additionally, the etalon assembly includes an outer glass housing with an inner cavity, the inner housing being affixed to a first end of the outer glass housing and a glass header containing one or more sealed electrical pins being affixed to a second end of the outer glass housing that is opposite the first end.

In one or more of the embodiments described herein, the inner housing has a moisture-resistant sealed cavity in which the collimating lens and the etalon are disposed.

In one embodiment, a method of aligning optical components of an etalon assembly including a fibre pigtail assembly, a collimating lens, and an etalon is provided. The method includes the step of aligning the collimating lens with respect to the etalon within a moisture-resistant sealed cylindrical cavity. The method also includes the step of aligning the fibre pigtail assembly with respect to the collimating lens.

In one or more of the embodiments described herein, the collimating lens and the etalon are disposed within the sealed cylindrical cavity and the etalon is moved along an axial direction of the sealed cylindrical cavity to align the collimating lens with respect to the etalon.

In one or more of the embodiments described herein, the method includes the step of affixing an axial position of the etalon within the sealed cylindrical cavity after the collimating lens has been aligned with respect to the etalon within the sealed cylindrical cavity.

In one or more of the embodiments described herein, the fibre pigtail assembly is aligned with respect to the collimating lens along two mutually orthogonal axes both of which are orthogonal to an optical axis of the etalon assembly.

In one or more of the embodiments described herein, the method includes the step of affixing a position of the fibre pigtail assembly after the fibre pigtail assembly has been aligned with respect to the collimating lens.

Embodiments of the present invention described above contemplate an etalon assembly that is a component of a tunable dispersion compensator and has input and output fibres arranged on the same side. In further embodiments of the present invention, an etalon assembly as defined by the claims appended hereto may have input and output fibres arranged on opposite sides and may be a component of other optical devices that employ etalons, including other types of all-pass filters, delay line interferometers, tunable filters, ASE cone filters, and the like.

In sum, embodiments of the invention provide a micro-optic assembly with contamination-sensitive surfaces isolated from ambient contamination and a method of forming the same. The micro-optic assembly is suitable for use in a number of applications. Because the etalon and collimating lens of the micro-optic assembly are enclosed in a single glass tube, the micro-optic assembly can be very small in size--a feature that promotes low power dissipation since less mass is heated during operation. In addition, the small size of the micro-optic assembly disclosed herein reduces the response time of the micro-optic assembly since there is less thermal mass to be heated during operation. Further, the compact construction of the micro-optic assembly minimizes the size and cost of the etalon and collimating lens contained therein.

While the foregoing is directed to embodiments of the present invention, other and further embodiments of the invention may be devised without departing from the basic scope thereof, and the scope thereof is determined by the claims that follow.

## Claims

1. An etalon assembly comprising:
an inner housing including a collimating lens and an etalon;
a fibre pigtail assembly optically aligned with respect to the collimating lens and affixed to the inner housing; and
an outer glass housing with an inner cavity, the inner housing being affixed to a first end of the outer glass housing and a glass header containing one or more sealed electrical pins being affixed to a second end of the outer glass housing that is opposite the first end.

2. The etalon assembly of claim 1, wherein the inner housing has a moisture-resistant sealed cavity in which the collimating lens and the etalon are disposed, the sealed cavity optionally being moisture resistant to at least 1000 hours of exposure to damp heat at 85 °C and 85% humidity.

3. The etalon assembly of claim 2, wherein a concentration of water vapour within the sealed cavity is less than 15,000 ppm, optionally less that 5000 ppm; and/or a concentration of volatile condensable material within the sealed cavity is less than 7500 ppm, optionally less than 2500 ppm.

4. The etalon assembly of claim 2 or 3, further comprising a heater attached to the etalon, the heater being disposed outside the sealed cavity and optionally coupled to the electrical pins.

5. A method of assembling an optical device comprising:
sealing a first end of a cylindrical cavity of a housing to which a first optical element is attached;
heating the cylindrical cavity to a first temperature;
attaching a second optical element to a second end of the cylindrical cavity opposite the first end and then cooling the cylindrical cavity to a second temperature that is lower than the first temperature; and
sealing the second end of the cylindrical cavity.

6. The method of claim 5, wherein the second end of the cylindrical cavity is sealed while the cylindrical cavity is being cooled to the second temperature, and wherein optionally the housing has a chamfer portion at an end where the second optical element is inserted and a sealing material is introduced into the chamfer portion to allow the sealing material to wick into gaps between the second optical element and the housing as the cylindrical cavity is being cooled.

7. The method of claim 5 or 6, further comprising:
attaching a third optical element to the first optical element to form a sub-assembly of first, second, and third optical elements.

8. The method of claim 5, 6 or 7, wherein the first optical element includes a collimating lens, the second optical element includes an etalon, and the third optical element includes a fibre pigtail assembly.

9. The method of claim 8, further comprising:
sealing a first end of a cylindrical cavity of an outer housing into which the sub-assembly is inserted;
heating the cylindrical cavity of the outer glass housing to a third temperature;
inserting a glass header into a second end of the cylindrical cavity of the outer housing opposite the first end and then cooling the cylindrical cavity of the outer housing to a fourth temperature that is lower than the third temperature; and
sealing the second end of the cylindrical cavity of the outer housing;
and wherein optionally the second end of the cylindrical cavity of the outer housing is sealed while the cylindrical cavity of the outer housing is being cooled to the fourth temperature;
and optionally the outer housing has a chamfer portion at an end where the glass header is inserted and a sealing material is introduced into the chamfer portion to allow the sealing material to wick into gaps between the glass header and the outer housing as the cylindrical cavity of the outer housing is being cooled.

10. The method of claim 9, wherein the outer housing is made of glass.

11. The method of any of claims 5 to 10, wherein the housing is made of glass.

12. A method of assembling an optical device comprising:
sealing a first end of a cylindrical cavity of a housing into which a sub-assembly including a fibre pigtail assembly, a collimating lens, and an etalon is inserted;
heating the cylindrical cavity of the housing to a first temperature;
inserting a glass header into a second end of the cylindrical cavity of the housing opposite the first end and then cooling the cylindrical cavity of the housing to a second temperature that is lower than the first temperature; and
sealing the second end of the cylindrical cavity of the housing.

13. A method of aligning optical components of an etalon assembly including a fibre pigtail assembly, a collimating lens, and an etalon, comprising:
aligning the collimating lens with respect to the etalon within a moisture-resistant sealed cylindrical cavity; and then
aligning the fibre pigtail assembly with respect to the collimating lens.

14. The method of claim 13, wherein the collimating lens and the etalon are disposed within the sealed cylindrical cavity and the etalon is moved along an axial direction of the sealed cylindrical cavity to align the collimating lens with respect to the etalon, the method optionally further comprising affixing an axial position of the etalon within the sealed cylindrical cavity after the collimating lens has been aligned with respect to the etalon within the sealed cylindrical cavity.

15. The method of claim 13 or 14, wherein the fibre pigtail assembly is aligned with respect to the collimating lens along two mutually orthogonal axes both of which are orthogonal to an optical axis of the etalon assembly, the method optionally further comprising affixing a position of the fibre pigtail assembly after the fibre pigtail assembly has been aligned with respect to the collimating lens.
